# EUROPÄISCHE PATENTSCHRIFT

(11) **EP 0 968 863 B1**
(45) Veröffentlichungstag und Bekanntmachung des Hinweises auf die Patenterteilung: **17.12.2003**
(21) Anmeldenummer: 99111712.8
(22) Anmeldetag: 17.06.1999
(51) Int. Cl.: B60J 5/10

(54) **Kraftfahrzeug mit einer Heckklappe**
Motor vehicle having a hatchback
Véhicule à moteur ayant un hayon

(30) Priorität: 03.07.1998 DE 19829731
(43) Veröffentlichungstag der Anmeldung: 05.01.2000
(73) Patentinhaber: Siemens Aktiengesellschaft, 80333 München (DE)
(72) Erfinder: Greif, Thomas, 53229 Bonn (DE)

(56) Entgegenhaltungen:
- DE-A- 19 533 804
- PATENT ABSTRACTS OF JAPAN vol. 1996, no. 02, 29. Februar 1996 (1996-02-29) & JP 07 266891 A (NISSAN DIESEL MOTOR CO LTD), 17. Oktober 1995 (1995-10-17)

## Beschreibung

Die Erfindung betrifft ein Kraftfahrzeug mit einer Heckklappe oder dergleichen, gemäß dem in der DE 195 33804 A1 offenbarten Oberbegriff des Anspruchs 1.

Fahrzeuge, insbesondere Personenkraftwagen, weisen in der Regel im Bereich des Fahrzeughecks eine Heckklappe auf, die geschlossen ist oder geöffnet werden kann. Um eine ausreichende Zugänglichkeit zu dem von er Heckklappe abgedeckten Raum (insbesondere Kofferraum) zu gewährleisten und um Verletzungsgefahren von Personen bei geöffneter Heckklappe zu vermeiden, sind diese Heckklappen so gestaltet, dass sie über die Fahrzeugaußenkonturen, besonders über die Fahrzeugoberkante oder auch seitlich am Fahrzeug im geöffneten Zustand überstehen. Diese Heckklappen sind darüber hinaus oftmals mit Gasdruckfedern oder dergleichen versehen, die bewirken, dass nach der Entriegelung der Heckklappe diese in ihre geöffnete Stellung selbsttätig aufspringen. Dabei kann es passieren, dass beim Aufspringen in die Öffnungsstellung die Heckklappe gegen Hindernisse, wie zum Beispiel in einer Garage an deren Decke, springt, so dass die Außenhaut der Heckklappe beschädigt wird. Darüber hinaus kann es vorkommen, dass bei Heckklappen, die mit einer Öffnungshilfe versehen sind, wobei die Öffnungshilfe von einer Fernbedienung betätigt wird und die Heckklappe entriegelt wurde, die aufspringende Heckklappe gegen eine davor stehende Person schwingen könnte. Auch dies ist von unerwünschtem Nachteil, weil es Verletzungen geben kann.

Aus der DE 195 33 804 A1 ist eine Fahrzeugtür mit einer hilfskraftbetätigten Feststellvorrichtung bekannt geworden, bei der ein am Türrand angeordneter Sensor der Feststellvorrichtung zugeordnet ist. Die Feststellvorrichtung blockiert die Bewegung der Tür, wenn ein Abstand (a) um einen Gegenstand, beispielsweise ein neben dem Fahrzeug parkendes weiteres Fahrzeug erreicht ist.

Der Erfindung liegt daher die Aufgabe zugrunde, ein Kraftfahrzeug mit einer Heckklappe oder dergleichen bereitzustellen, bei dem wirksam vermieden wird, dass die Heckklappe gegen ein Hindernis gelangt und dass sich ein Montageaufwand für eine zusätzliche Einparkhilfe besonders gering halten lässt.

Diese Aufgabe ist durch die Merkmale des Patentanspruches 1 gelöst.

Erfindungsgemäß sind in der Heckklappe Mittel integriert, die zur Erfassung von Objekten zumindest beim Öffnungsvorgang ausgebildet sind, wobei diese Mittel den Bewegungsbereich der Heckklappe von der geschlossenen Stellung in die geöffnete Stellung (und gegebenenfalls auch umgekehrt) abtasten. Tritt bei diesem Öffnungsvorgang (oder auch dem Schließvorgang) ein Hindernis auf, kann entweder ein Warnsignal (akustisch und/oder optisch) abgegeben werden oder auch durch geeignete Mittel der weitere Schwenkvorgang der Heckklappe unterbrochen werden. Damit wird wirksam vermieden, dass beim Öffnungsvorgang (und genauso beim Schließvorgang, falls dieser manuell oder mittels eines Antriebes durchgeführt wird), die Heckklappe gegen Objekte (Hindernisse) stößt, so dass keine Personen verletzt und auch die Heckklappe, insbesondere im Außenbereich, nicht beschädigt werden kann. Weiterhin sind die Mittel zur Erfassung von Objekten auch zur Erfassung von sich im Heckbereich des Kraftfahrzeuges befindenden Objekten, insbesondere parkenden, weiteren Kraftfahrzeugen ausgebildet. Dies hat den Vorteil, dass die Mittel zur Erfassung von Objekten zweifach genutzt werden. Einmal werden sie als sogenannte Öffnungsbremse verwendet, so dass sie ein Hindernis im Schwenkbereich der Heckklappe beim Öffnungsvorgang erfassen und das schon genannte Warnsignal abgeben oder den weiteren Öffnungsvorgang bremsen oder aufhalten. Ist die Heckklappe geschlossen, können diese Mittel zur Erfassung von Objekten als sogenannte Einparkhilfe eingesetzt werden. Diese Einparkhilfe signalisiert dem rückwärts fahrenden Fahrer des Fahrzeuges durch optische und/oder akustische Signale, wie viel Platz noch zu dem hinter dem eigenen Fahrzeug stehenden, weiteren Fahrzeug zur Verfügung steht, um beim Einparken den zur Verfügung stehenden Raum optimal ausnutzen zu können. Somit können die Mittel doppelt verwendet werden, wodurch in vorteilhafter Weise Mittel eingespart werden können und sich der Montageaufwand verringert. Da in der Regel solche Mittel zur Erfassung von Objekten, die in einer Ausgestaltung der Erfindung als Radar-, Infrarot- und/oder Ultraschallsensoren ausgebildet sind, über die Außenhaut des Fahrzeuges überstehen, verbessert sich das Erscheinungsbild des Fahrzeuges, da die Mittel nur einmal für zwei Funktionen vorhanden sind.

Bisher wurde, und dies gilt auch für das Folgende, der Begriff "Heckklappe" verwendet, wobei unter diesem Begriff der Kofferraumdeckel von Stufenhecklimousinen oder Fließhecklimousinen zu verstehen ist, aber auch die Heckklappe von Kombis oder Vans, ebenso wie auch die hinteren Ladetüren von Transportern und Lastwagen.

In Weiterbildung der Erfindung wirken die Mittel zur Erfassung von Objekten als Einparkhilfe bei einer Geschwindigkeit oberhalb eines Sollwertes, insbesondere gleich oder unwesentlich größer gleich Null, und als Öffnungsbremse unterhalb dieses Sollwertes für den Öffnungsvorgang der Heckklappe. Somit kann bei stehendem Fahrzeug beim Öffnen und Feststellen eines Hindernisses die Öffnungsbremse aktiviert werden, während beim einparkenden Fahrzeug an den Fahrer das Warnsignal abgegeben wird. Damit wird vermieden, dass zum Beispiel schon beim Einparken und Feststellen eines sich nähernden Hindernisses die Öffnungsbremse aktiviert wird.

In Weiterbildung der Erfindung wird bei einem während des Öffnungsvorganges erfassten Objekt der Öffnungsvorgang abgebremst oder gestoppt. Zu diesem Zweck ist ein Bremsaktuator vorhanden, der in Abhängigkeit von einem Ausgangssignal der Mittel zur Erfassung von Objekten die weitere Öffnungsbewegung der Heckklappe abbremsen oder sogar kurzfristig stoppen kann. Dieser Bremsaktuator kann beispielsweise in den Gasdruckdämpfern integriert sein, aber auch als separates Bauteil und gegebenenfalls als Gegenantrieb ausgestaltet sein. Denkbar ist es auch, diesen Bremsaktuator in der Anlenkung der Heckklappe an einer Karosserie des Fahrzeuges (zum Beispiel in Form einer Backenbremse) auszuführen.

In Weiterbildung der Erfindung ist ein Sensor zur Erfassung der Öffnungsstellung der Heckklappe vorgesehen, so daß die Erfassung von Objekten bei der Wirkungsweise der Mittel als Öffnungsbremse erst ab einer vorgebbaren Öffnungsstellung der Heckklappe zugelassen wird. Hierbei wird davon ausgegangen, daß nach dem Entriegeln der Heckklappe diese entweder selbsttätig einen bestimmten Öffnungsweg ausführen darf oder eine Person diesen bestimmten Öffnungsweg manuell ausführt, bevor die Mittel zur Erfassung von Objekten aktiviert werden. Damit soll erreicht werden, daß die Heckklappe ohne Abbremsung oder Stoppen schon ausreichend weit geöffnet werden kann, wobei eine ausreichend weite Öffnung eine solche ist, bei der die Heckklappe die Außenkonturen des Fahrzeuges noch nicht verläßt. Erst wenn eine Stellung größer oder gleich einer Stellung, die einer Stellung entspricht, bei der die Heckklappe außerhalb der Außenkonturen des Fahrzeuges liegt, festgestellt worden ist, werden die Mittel zur Erfassung von Objekten aktiviert oder deren Ausgangssignal zur Weiterverarbeitung freigegeben. Ist also eine vorgebbare Öffnungsstellung erreicht oder überschritten, kann bei erfaßten Hindernissen die Abbremsung ausgelöst oder die weitere Bewegung der Heckklappe gestoppt werden. Damit liegt es also in der Verantwortung der Bedienperson des Fahrzeuges, die Heckklappe selbsttätig bis zu der vorgebbaren Öffnungsstellung zu bewegen, ohne daß der Abbremsvorgang oder das Stoppen eingeleitet wird. Erst wenn aufgrund des Öffnungsvorganges die Heckklappe in einen Bereich eintaucht, der außerhalb der Fahrzeugkonturen liegt, wird die Automatik zum Abbremsen oder Stoppen aktiviert.

In Weiterbildung der Erfindung weisen die Mittel in Abhängigkeit ihrer jeweiligen Wirkungsweise (Einparkhilfe/Öffnungsbremse) unterschiedliche Erfassungscharakteristika auf. Anstelle dessen kann vorgesehen werden, bei ein und derselben Erfassungscharakteristik das Ausgangssignal der Mittel unterschiedlich zu bewerten. Während für die Einparkhilfe eine Distanz von mehreren Metern zur Verfügung steht, bevor ein Hindernis auftaucht, und auch der Einparkvorgang relativ langsam vonstatten geht, kann es beim Öffnungsvorgang der Heckklappe erforderlich sein, bei diesem Öffnungsvorgang die Annäherung der Heckklappe an das Hindernis relativ schnell zu erfassen und die weitere Bewegung abzubremsen oder aufzuhalten, da hierbei die Abstände zu Hindernissen geringer sind als beim Einparken.. Daher ist der Einsatz unterschiedlicher Erfassungscharakteristiken oder eine unterschiedliche Bewertung des Ausgangssignales der Mittel zur Erfassung von Objekten erforderlich.

In Weiterbildung der Erfindung sind die Mittel am unteren Rand der Heckklappe in deren geschlossenen Zustand angeordnet. Dadurch sind diese Mittel im geschlossenen Zustand an einem solchen Ort angeordnet, von dem aus beim Einparken weitere Fahrzeuge sehr gut erfaßbar sind. Außerdem legt beim Öffnungsvorgang der untere Rand der Heckklappe den größtmöglichen Weg zurück, so daß eine sehr feinfühlige Erfassung von Hindernissen beim Öffnungsvorgang möglich ist. In der Regel ist auch der untere Rand der Heckklappe dasjenige Teil der Heckklappe, das beim Auftauchen eines Hindernisses als erster Bereich an dieses Hindernis stoßen würde. Ist dies aufgrund der geometrischen Gestaltung der Heckklappe nicht der Fall, so ist dies bei der Erfassungscharakteristik der Mittel zur Erfassung von Objekten entsprechend zu berücksichtigen.

Die vorliegende Erfindung ist anhand eines Ausführungsbeispiels im folgenden näher beschrieben und anhand der Figuren erläutert, wobei es sich um ein Ausführungsbeispiel handelt, auf daß die Erfindung nicht beschränkt ist.

Es zeigen:
- Figur 1:: den Heckbereich eines Fahrzeuges,
- Figur 2:: eine Steuereinrichtung und deren Beschaltung.

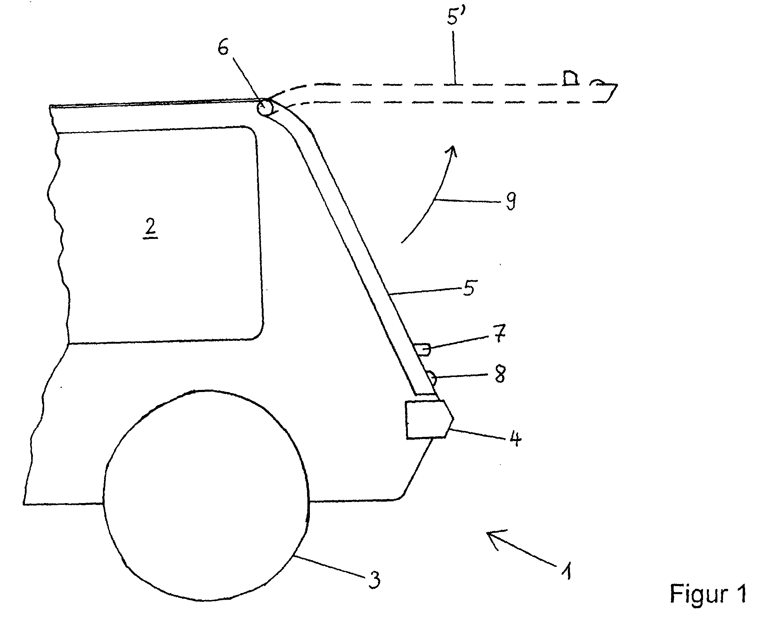

In Figur 1 ist ein Fahrzeugheck 1 eines teilweise gezeigten Fahrzeuges dargestellt, wobei zum besseren Verständnis ein Seitenfenster 2, ein Hinterrad 3 sowie eine Stoßstange 4 angedeutet sind. Eine Heckklappe 5 ist um ein Gelenk 6 herum schwenkbar an der Karosserie des Fahrzeuges angelenkt, wobei es hierbei auf die konstruktive Ausgestaltung des Gelenkes 6 nicht ankommt. Die geöffnete Stellung der Heckklappe 5 ist gestrichelt dargestellt und mit der Bezugsziffer 5' versehen.

Die Heckklappe 5 weist weiterhin ein Bedienelement 7 auf, bei dem es sich beispielsweise um den Schließzylinder für die Schließeinrichtung der Heckklappe 5 handeln kann. Ist die Heckklappe 5 mit einer fernbedienbaren Öffnungshilfe versehen, kann dieses Bedienelement 7 entfallen oder aus Sicherheitsgründen als Redundanz weiter vorhanden sein.

Wie in Figur 1 erkennbar ist, ist als Mittel zur Erfassung von Objekten am unteren Rand der Heckklappe 5 ein Sensor 8 vorgesehen, wobei dieser Sensor 8 längs des unteren Randes der Heckklappe 5 auch mehrfach vorhanden sein kann. Dies ist insbesondere dann der Fall, wenn der Sensor 8 nicht nur Objekte beim Öffnungsvorgang der Heckklappe 5 in einer Schwenkrichtung 9 erfassen soll, sondern auch als Einparkhilfe verwendet wird. Hier ist übrigens als weiterer Vorteil zu nennen, daß der Sensor 8 (beziehungsweise mehrere Sensoren 8) in einem solchen Bereich angeordnet sind, der sich sehr in der Nähe der Stoßstange 4 befindet, wobei bei schon bekannten Einparkhilfen deren Sensoren in der Stoßstange angeordnet sind. Somit kann aufgrund der vorliegenden Ausgestaltung die Stoßstange 4 in ihrer konstruktiven Gestaltung einfacher ausfallen, wobei auch wirksam vermieden wird, daß für den Fall, daß trotz Einparkhilfe die Stoßstange 4 beschädigt wird, eine aufwendige Reparatur der Einparkhilfe, beziehungsweise deren Sensoren, entfallen kann.

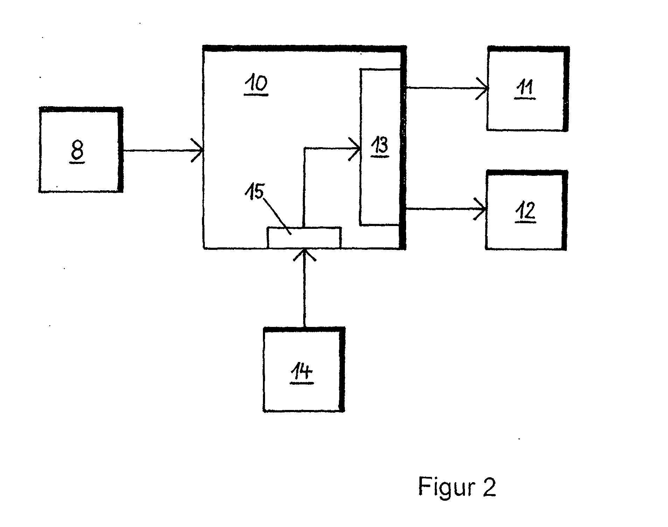

In Figur 2 ist eine Steuereinrichtung 10 und deren Beschaltung gezeigt, die mit dem Sensor 8 (beziehungsweise mehrerer solcher Sensoren) verschaltet ist. Zum einen ist diese Steuereinrichtung 10 so ausgelegt, daß in Abhängigkeit des Ausgangssignales des Sensors 8 bei einem erfaßten Hindernis ein Bremsaktuator 11 (oder mehrere) angesteuert wird (werden). Dieser Bremsaktuator 11 ist derart ausgestaltet, daß er den weiteren Öffnungsvorgang der Heckklappe 5 abbremst oder abstoppt. Als mögliche Ausgestaltung eines Bremsaktuators sei eine Art Reibbremse erwähnt, die auf eine Welle der Heckklappe 5 in dem Gelenk 6 wirkt. Anstelle dessen kann bei Heckklappen 5, die mit Gasdruckstoßdämpfern versehen sind, dieser Gasdruckstoßdämpfer so modifiziert werden, daß durch eine Änderung des Gasvolumens der weitere Öffnungsvorgang unterbrochen wird. Denkbar ist auch ein Seil, ein Bowdenzug oder dergleichen, das an der Heckklappe 5 angeordnet ist und sich beim Öffnungsvorgang von einer Karosserie seitlich angeordneten Seiltrommel abrollt. Wird von dem Sensor 8 ein Hindernis erfaßt, kommt es zu einem Abbremsen oder Abstoppen des Abrollen des Seiles, so daß der weitere Öffnungsvorgang der Heckklappe 5 unterbrochen wird. Ebenso könnten Bremsbacken auf das Seil, eine Stange oder dergleichen wirken.

Die Steuereinheit 10 weist weiterhin eine Ausgabeeinrichtung 12 auf, die einerseits dazu genutzt werden kann, beim Auftreten eines Hindernisses beim Öffnungsvorgang der Heckklappe 5 ein optisches und/oder ein akustisches Signal abzugeben. Darüber hinaus kann diese Ausgabeeinrichtung 12 bei gleicher Ausführung aber auch für eine andere Funktion verwendet werden, wie dies im folgenden geschildert wird. In der Steuereinrichtung 10 ist eine Umschalteinrichtung 13 integriert, wobei diese Umschalteinrichtung 13 zumindest von einem Geschwindigkeitssensor 14, der die Geschwindigkeit des Fahrzeuges erfaßt, angesteuert wird. Das Ausgangssignal des Geschwindigkeitssensors 14, also die ermittelte Geschwindigkeit des Fahrzeuges, wird einer in der Steuereinrichtung 10 integrierten Differenziereinrichtung 15 zugeführt. Stellt die Differenziereinrichtung 15 fest, daß die Geschwindigkeit oberhalb eines Sollwertes, insbesondere gleich oder unwesentlich größer gleich Null, liegt, ist bei Rückwärtsfahrt des Fahrzeuges davon auszugehen, daß die Steuereinrichtung 10 als sogenannte Einparkhilfe betrieben werden soll. Dann wird das Ausgangssignal des Sensors 8, das den Abstand des eigenen Fahrzeuges zu einem sich dahinter befindenden Fahrzeuges darstellt, von der Steuereinrichtung 10 ausgewertet und in Abhängigkeit des Abstandes der beiden Fahrzeuge zueinander die Ausgabeeinrichtung 12 von der Umschalteinrichtung 13 aktiviert, so daß der Fahrer von dieser Ausgabeeinrichtung 12 eine Information darüber erhält, wieviel Raum noch zum Einparken zur Verfügung steht.

Gibt der Geschwindigkeitssensor 14 ein solches Signal ab, das ein stehendes Fahrzeug darstellt, wird dies von der Differenziereinrichtung 15 erfaßt und von der Umschalteinrichtung 13 das Ausgangssignal des Sensors 8 auf den Bremsaktuator 11 gegeben, so daß nun beim Öffnen der Heckklappe 5 der Sensor 8 Objekte erfaßt und vor dem Anstoßen der Heckklappe 5 an ein solches Objekt der Bremsaktuator 11 in der schon beschriebenen Art und Weise aktiviert werden kann.

Denkbar, aber in Figur 2 nicht dargestellt, ist ein weiterer mit der Steuereinrichtung 10 verschalteter Sensor, der die Öffnungsstellung der Heckklappe 5 erfaßt. Dieser Sensor unterbricht die Abgabe des Ausgangssignales des Sensors 8 an den Bremsaktuator 11 oder deaktiviert den Bremsaktuator 11 so lange, bis die Heckklappe 5 eine Stellung erreicht hat oder diese erreichte Stellung überschreitet, bei der die Heckklappe 5 die Außenkonturen des Fahrzeuges verläßt. Dies hat den Zweck, daß die Steuereinrichtung 10 und damit der Bremsaktuator 11 so lange noch nicht aktiviert wird, wie eine Beschädigung der Heckklappe 5 noch nicht gegeben ist. Erst wenn sich die Heckklappe 5 in einem Bereich befindet, in dem eine Beschädigung möglich wäre, wird eine Aktivierung des Bremsaktuators 11 zugelassen.

### Bezugszeichenliste:

- 1.: Fahrzeugheck
- 2.: Seitenfenster
- 3.: Hinterrad
- 4.: Stoßstange
- 5.: Heckklappe
- 6.: Gelenk
- 7.: Bedienelement
- 8.: Sensor
- 9.: Schwenkrichtung
- 10.: Steuereinrichtung
- 11.: Bremsaktuator
- 12.: Ausgabeeinrichtung
- 13.: Umschalteinrichtung
- 14.: Geschwindigkeitssensor
- 15.: Differenziereinrichtung

## Patentansprüche

1. Fahrzeug mit einer Heckklappe (5) oder dergleichen und mit Mitteln (8) zur Erfassung von außerhalb des Fahrzeugs befindlichen Objekten, **dadurch gekennzeichnet, dass** die Mittel (8) zur Erfassung von Objekten zumindest einen an der Heckklappe (5) angeordneten Sensor (8) aufweisen und zumindest beim Öffnungsvorgang der Heckklappe (5) aktivierbar sind, dass eine die Signale des Sensors (8) auswertende Steuereinrichtung (10) mit dem Sensor (8) verbunden ist, und dass die Mittel (8) zur Erfassung von Objekten bei geschlossener Heckklappe (5) zur Erfassung von sich im Heckbereich des Fahrzeuges befindlichen Objekten, insbesondere parkenden, weiteren Fahrzeugen ausgebildet sind.

2. Fahrzeug nach Anspruch 1, **dadurch gekennzeichnet, dass** die Mittel (8) als Einparkhilfe bei einer Geschwindigkeit des Fahrzeuges oberhalb eines Sollwertes, insbesondere gleich oder unwesentlich größer gleich 0, und als Öffnungsbremse unterhalb dieses Sollwertes für den Öffnungsvorgang der Heckklappe (5) wirken.

3. Fahrzeug nach einem der Ansprüche 1 oder 2, **dadurch gekennzeichnet, dass** bei einem während des Öffnungsvorganges erfassten Objekt der Öffnungsvorgang abgebremst oder gestoppt wird.

4. Fahrzeug nach Anspruch 3, **dadurch gekennzeichnet, dass** ein weterer Sensor zur Erfassung der Öffnungsstellung der Heckklappe (5) vorgesehen ist, so dass die Erfassung von Objekten bei der Wirkungsweise der Mittel (8) als Öffnungsbremse erst ab einer vorgebbaren Öffnungsstellung der Heckklappe (5) zugelassen wird.

5. Fahrzeug nach einem der vorhergehenden Ansprüche, **dadurch gekennzeichnet, dass** die Mittel (3) in Abhängigkeit ihrer jeweiligen Wirkungsweise (Einparkhilfe/ Öffnungsbremse) unterschiedliche Erfassungscharakteristika aufweisen.

6. Fahrzeug nach einem der vorhergehenden Ansprüche, **dadurch gekennzeichnet, dass** die Mittel (3) als Radar-, Infrarotund/oder Ultraschallsensoren ausgebildet sind.

7. Fahrzeug nach einem der vorhergehenden Ansprüche, **dadurch gekennzeichnet, dass** die Mittel (8) am unteren Rand der Heckklappe (5) in deren geschlossenem Zustand angeordnet sind.

8. Fahrzeug nach einem der vorhergehenden Ansprüche, **dadurch gekennzeichnet, dass** ein den Öffnungsvorgang der Heckklappe (5) bei Erfassung eines Objektes bremsender oder abbrechender Bremsaktuator (11) mit der Steuereinrichtung (10) verbunden ist.

## Claims

1. Vehicle having a tailgate (5) or the like and having means (8) for sensing objects located outside the vehicle, **characterized in that** the means (8) for sensing objects have at least one sensor (8) which is arranged on the tailgate (5), and can be activated at least when the opening process of the tailgate (5) takes place, **in that** a control device (10) which evaluates the signals of the sensor (8) is connected to the sensor (8), and **in that** the means (8) for sensing objects when the tailgate (5) is closed are designed to sense objects which are located in the area behind the vehicle, in particular other parked vehicles.

2. Vehicle according to Claim 1, **characterized in that** the means (8) act as a parking aid when the vehicle has a speed above a setpoint value, in particular equal to or insignificantly greater than or equal to 0, and below this setpoint value as an opening brake for the opening process of the tailgate (5).

3. Vehicle according to one of Claims 1 or 2, **characterized in that** the opening process is braked or stopped when an object is sensed during the opening process.

4. Vehicle according to Claim 3, **characterized in that** a further sensor is provided for sensing the open position of the tailgate (5) so that, in the mode of operation of the means (8) as an opening brake, the sensing of objects is permitted only starting from a predefinable open position of the tailgate (5).

5. Vehicle according to one of the preceding claims, **characterized in that** the means (8) have different sensing characteristics depending on their respective mode of operation (parking aid/opening brake).

6. Vehicle according to one of the preceding claims, **characterized in that** the means (8) are embodied as radar sensors, infrared sensors and/or ultrasonic sensors.

7. Vehicle according to one of the preceding claims, **characterized in that** the means (8) are arranged on the lower edge of the tailgate (5) in its closed state.

8. Vehicle according to one of the preceding claims, **characterized in that** a brake actuator (11) which brakes or aborts the opening process of the tailgate (5) when an object is sensed is connected to the control device (10).

## Revendications

1. Véhicule, ayant un hayon (5) ou un élément similaire et des moyens (8) destinés à détecter des objets qui se trouvent à l'extérieur du véhicule, **caractérisé par le fait que** les m oyens ( 8) destinés à détecter des objets comportent au moins un capteur (8) monté sur le hayon (5) et qu'ils peuvent être activés, au moins, lors du processus d'ouverture du hayon (5), qu'un dispositif de commande (10), qui évalue les signaux du capteur (8), est relié au capteur (8) et que les moyens (8) destinés à détecter des objets lorsque le hayon (5) est fermé, sont conçus pour détecter des objets qui se trouvent dans la zone arrière du véhicule, notamment d'autres véhicules en stationnement.

2. Véhicule selon la revendication 1 **caractérisé par le fait que** les moyens (8) agissent comme assistance à la mise au stationnement, lorsque la vitesse du véhicule est supérieure à une valeur de consigne, notamment égale ou insensiblement supérieure à zéro, et comme f rein à l'ouverture p our le processus d'ouverture du hayon (5), lorsque la vitesse du véhicule est inférieure à cette valeur de consigne.

3. Véhicule selon l'une des revendications 1 ou 2 **caractérisé par le fait que**, dans le cas où un objet est détecté pendant le processus d'ouverture, le processus d'ouverture est freiné ou arrêté.

4. Véhicule selon la revendication 3 **caractérisé par le fait qu'**il est prévu un autre capteur destiné à détecter la position d'ouverture du hayon (5) si bien que la détection d'objets, dans le mode de fonctionnement des moyens (8) comme frein à l'ouverture, n'est validée qu'à partir d'une position donnée d'ouverture du hayon (5).

5. Véhicule selon l'une des revendications précédentes **caractérisé par le fait que** les moyens (8) ont différentes caractéristiques de détection en fonction de leur mode respectif de fonctionnement (assistance à la mise au stationnement /frein à l'ouverture).

6. Véhicule selon l'une des revendications précédentes **caractérisé par le fait que** les moyens (8) sont conçus comme capteurs à radar, à infrarouge et/ou à ultrasons.

7. Véhicule selon l'une des revendications précédentes **caractérisé par le fait que** les moyens (8) sont disposés sur le bord inférieur du hayon (5) dans sa position fermée.

8. Véhicule selon l'une des revendications précédentes **caractérisé par le fait qu'**un actionneur de freinage (11 ), qui freine ou qui interrompt le processus d'ouverture du hayon (5) lors de la détection d'un objet, est relié au dispositif de commande (10).
